# EUROPEAN PATENT APPLICATION

(11) **EP 4 446 583 A1**
(43) Date of publication of application: **16.10.2024**
(21) Application number: 23196621.9
(22) Date of filing: 11.09.2023
(51) Int. Cl.: F04B 17/04, F04B 53/12, H02K 33/16

(54) **PISTON PUMP**

(30) Priority: 10.04.2023 DE 202023000776 U
(71) Applicant: Zucht, Manfred, 8552 Eibiswald (AT)
(72) Inventor: Zucht, Manfred, 8552 Eibiswald (AT)
(74) Representative: Lohr, Jöstingmeier & Partner

(57) **Abstract**

Piston pump (1) for pumping a fluid comprising an inlet channel (310), an outlet channel (410), a piston (200), an armature (100), an elastic element (280), a first check valve (700), a piston chamber (180), a longitudinal axis (L), a winding support (600) and a coil. The piston is movably supported parallel to the longitudinal axis in the piston chamber. The piston comprises a first face (260) with a piston channel inlet (220), a second face (270) with a piston channel outlet (230) and a piston channel (210) connecting the piston channel inlet and the piston channel outlet. The piston is biased in a first axial direction by the elastic element. The first check valve is arranged in the piston channel. The coil has at least one winding, wherein the at least one winding is arranged on the winding support. The inlet channel is configured to communicate with the piston channel inlet and the outlet channel is configured to communicate with piston channel outlet. A sleeve section of the winding support delimits at least a section of the piston chamber in the radial direction.

## Description

### Field of the invention

The invention relates to a piston pump for pumping a fluid. The piston pump may comprise an inlet channel, an outlet channel, a piston, an armature, an elastic element, a first check valve, a piston chamber, a longitudinal axis, a winding support and/or a winding support of a coil.

### Description of the related art

Generally, piston pumps pump a fluid by displacing a paramagnetic piston in a cylinder by an external magnetic field. The field is generated by a current through a coil. By the displacement of the piston a spring is loaded and forces the piston back into its initial position if the magnetic field is shut off. Hence with the frequency of an alternating current or a pulsating direct current through a coil the piston reciprocates forth and back. The pistons are guided in a sleeve/cylinder made of a non-magnetic material and form a pump chamber. Such piston pumps are known, e.g., from DE 10 2012 107 983 A1.

DE 102012 107 983 A1 relates to a vibratory piston pump having a piston slidably mounted in a pump chamber along its longitudinal axis for movement by excitation of a solenoid against a restoring force of a restoring member, wherein the piston comprises at least a first piston portion having a first cross-sectional area and at least a second piston portion having a second cross-sectional area, and the pump chamber having at least a first chamber portion in which the first piston portion is disposed and a second chamber portion in which the second piston portion is disposed, has improved pumping performance when the first chamber portion and the second chamber portion are pivotable relative to each other.

EP 2101059 A1 relates to an oscillating piston pump in which a stepped piston is displaced by a reluctance force in a pump chamber against the force of a spring. A fluid flows through a longitudinal channel of the piston. If the magnetic field is switched off or the polarity is reversed, the piston is displaced back to its initial position by the restoring force exerted by the spring, whereby the fluid column in the longitudinal channel is entrained in the direction of flow because a check valve is arranged in a chamber of the longitudinal channel, which prevents the fluid from flowing back. In order to guide the stepped piston in the pump chamber, at least one bearing ring is seated on the piston. The seal between the piston and the wall of the pump chamber is made by a liquid seal.

### Summary of the invention

The problem to be solved by the invention is to provide a more efficient pump which is cheap and easy to manufacture.

Solutions of the problem are described in the independent claims. The dependent claims relate to further improvements of the invention.

For example, the piston pump for pumping a fluid may comprise at least one of an inlet channel, an outlet channel, a piston, an armature, an elastic element, a first check valve, a piston chamber, a longitudinal axis, a winding support, and a coil. Preferably, the piston is movably supported parallel to the longitudinal axis in a piston chamber. In other words, the piston can reciprocate between a first and a second position parallel to the longitudinal axis.

The piston may comprise a first face with a piston channel inlet, a second face with a piston channel outlet, and a piston channel connecting the piston channel inlet and the piston channel outlet.

The inlet channel is preferably configured to communicate with the piston channel inlet and the outlet channel is configured to communicate with piston channel outlet. In operation a fluid to be pumped may flow via the piston channel from the inlet channel to the outlet channel. The flow direction is preferably constrained by the first check valve, i.e., the first check valve is configured to block a fluid flow from the outlet channel towards the inlet channel via the piston channel.

The coil has at least one winding, wherein the at least one winding is arranged on the winding support. By providing an electric current through the coil, a magnetic field can be generated, that forces the piston against restoring force of the elastic element. Shutting the magnetic field of causes the piston to be pushed back into its initial position by the elastic element. Hence, the elastic element may bias the piston in a first axial direction.

The sleeve section of the winding support delimits at least a section of the piston chamber in the radial direction.

As summarized above prior art piston pumps have a piston chamber that is delimited in the radial direction by a bushing, as well referred to as sleeve, that provides a linear bearing for the piston. The bushing is typically made of brass or stainless steel, depending on the application of the piston pump. On this bushing is a winding form as well referred to as coil form, coil support or winding support.

Only to avoid misunderstanding, herein, like in the art, a winding form is sleeve, often with a circular cylindrical or rectangular cross section, that may optionally have flanges. The winding form is configured to receive windings of a coil. These can be wound and then slid on the peripheral surface of the winding form or be wound directly on the winding form. Sometimes an isolating sheet (e.g., of paper) is located in between of the winding form's peripheral surface and the windings. s

The winding form is typically made of plastic or cardboard, or more generally of a non-magnetic (i.e., diamagnetic) and electrically isolating material. The bushings in the state-of-the-art results in the coil inducing eddy currents within the bushings. These eddy currents can be avoided by the invention. Thereby, the energy efficiency of the piston pump is enhanced. By omitting an additional prior art sleeve, the radial distance between the piston and the winding on the peripheral surface of the winding support can be reduced. This increase results in an increase of the delivery volume and or the pressure of the pump and if keeping the winding form's inner diameter constant. Without being bound to theory it its believed that the increase of the magnetic flux through the piston while keeping the magnetic field constant causes an increase of the pressure and/or the volume per stroke, while keeping the magnetic field inside the coil constant, i.e., without risking magnetic saturation of the piston.

The invention Is based on the observation, that the force exerted on the piston is limited by the magnetic saturation of the piston. Increasing the magnetic field over the field that causes the piston to be magnetically saturated will not result in a higher pressure or a higher fluid flow. The invention enables to increase the cross-sectional surface of a piston for a given coil and hence the total magnetic flux while maintain the magnetic flux density through the piston below the critical flux density above which magnetic saturation takes place or at least to increase the volume of the piston chamber and hence the pumped volume per piston stroke.

The invention is further based on the observation that the distance between the (innermost) windings of the coil and the piston is defined by prior art piston pumps by the sum of the thicknesses of the winding form and the bushing and the moving gap between the inner surface of the bushing and the piston.

In a preferred example, the invention enables to reduce the distance between the (innermost) windings of the coil and the piston and hence to increase the magnetic flow through the piston and/or to dimension the coil and smaller) and at the same time to reduce manufacturing costs by using the bushing and/or the sleeve delimiting the piston chamber radially as the winding form of the coil.

For example, the piston pump may be configured for pumping a fluid, such as oil, water or any other liquid or gas. The piston pump may be an oscillating piston pump. The piston pump may be used in electric cars and/or other units driven by electric motors for the circulation of lubricating fluids and/ cooling fluids, e.g., an engine oil, hydraulic oil or the like. In another example, the fluid may be water, an aqueous solution and/or a suspension, like beverages often are.

The piston pump may comprise an inlet channel, an outlet channel, a piston, an elastic element, a first check valve, a piston chamber, a longitudinal axis, a winding support and/or a coil. In a preferred example, the longitudinal axis is the piston axis. The inlet channel may have an inlet opening and/or the outlet channel may have an outlet opening. The piston pump may be configured to provide a fluid flow from the inlet opening via the inlet channel and the outlet channel to the outlet opening. The piston may be movably supported parallel to the longitudinal axis in the piston chamber. In other words, the piston may reciprocate forth and back parallel to the longitudinal axis.

The piston may have a first face facing the inlet channel and a second face facing the outlet channel. The first face and the second face may be connected by a peripheral surface of the piston. The first face and the second face are preferably connected by a piston channel. The piston channel may have a piston channel inlet in the first face and a piston channel outlet in the second face. In other words, the piston channel connects the piston channel inlet and the piston channel outlet. As will be explained below in more detail, the piston channel may comprise or accommodate the first check valve restricting the fluid flow through the channel in a first direction, i.e., enabling a fluid flow in the flow direction only, wherein the flow direction points from the piston channel inlet to the piston channel outlet.

The inlet channel may be in fluid communication with the piston channel inlet of the piston and the outlet channel may be in fluid communication with the piston channel outlet. Accordingly, the piston pump may be configured to allow for a fluid flow from the inlet opening via the inlet channel and the piston channel and the outlet channel to the outlet opening. The flow direction may hence as well be defined to point from the inlet opening to the outlet opening.

In a preferred example, the winding support delimits at least a section of the piston chamber in the radial direction. In other words, the winding support is a sleeve that has an inner surface. At least a portion of this inner surface radially delimits at least a section of the piston chamber. As usual, the piston chamber is the volume through which the piston may move, i.e., it has the length of the piston stroke length plus the piston length. The winding support may limit the piston chamber directly. i.e., in a preferred example the winding support provides a linear bearing for the piston and is in this sense a bushing. Neglecting the moving gap of the plain bearing formed by the peripheral surface of the piston and the inner surface of the sleeve section of the winding support, the piston's peripheral surface abuts or at least contacts the inner surface of the winding support or to be more precise the inner surface of the winding support's sleeve section. In this sense, at least a portion of the piston is accommodated, i.e., located in a recess of the winding support.

A magnetic cage may be attached to or be integrally formed with the armature. The magnetic cage extends from the armature around the coil towards the opposite end of the winding support. Magnetically, it might be advantageous if the cage contacts the peripheral surface of the piston, i.e., that the piston slides over a surface of the cage, however it turned out that a (preferably small) moving gap between the cage and the piston is preferred, as expensive surface treatments of the peripheral surface can be avoided.

Only to avoid misunderstandings, the winding support is a usual sleeve (with optional shoulders) onto which the coil is wound, typically directly. In some examples an isolating sheet is located in between of the winding support's peripheral surface and hence in between of the winding support's peripheral surface and the coil. The mechanical stability and in this sense the support of the coil is provided by the sleeve. Herein we use the terms winding form and winding support and coil form and coil support interchangeably.

As apparent, the coil is preferably located on the outer peripheral surface of the sleeve, preferably directly. At least a portion, e.g., a ring section of the coil support's inner surface may delimit at least a portion of the piston chamber radially. Thereby, the gap between the piston and the inner surface of the coil support can be reduced, which enables to increase the force being exerted on the piston if the coil is powered with a given current.

The piston channel may have a channel wall. The piston channel wall may limit the channel in the radial direction. The piston may comprise a magnetic material for example a paramagnetic material. In a preferred example, the piston is made of the magnetic material (except of the movable parts of the first check valve). In other words, preferably the portion of the piston that surrounds the piston channel is made of the magnetic material. In some examples, the magnetic material may have a coating to reduce the friction and/or an O-ring to seal the moving gap. These are of cause mostly non-magnetic.

The piston's peripheral surface may be (at least essentially) cylindrical (for a definition of the term cylindrical surface, see Bronshtein, Semedyayev, Musoal, Muehlig: *Handbook of mathematics, fifth ed.,* Sec. 3.3.4, Springer). Herein, we assume for conceptual simplicity, that the piston's spherical surface is a circular cylinder surface (a section of if to be precise and hence have constant outer diameter). But other peripheral surfaces are possible as well. In particular, the piston may comprise non cylindrical sections or be entirely non cylindrical.

The piston channel may have a first piston channel section with a first diameter and a second piston channel section with a second diameter. The first diameter may be smaller than the second diameter. The first check valve may be located in the second piston channel section, thereby keeping the reduction of the effective cross-sectional surface of the piston channel due to the first check valve small or preferably negligible. But at this point it must be noted that the increase of the second diameter reduced the cross-sectional surface of the magnetic material of the piston in this area and hence the critical magnetic flux through the piston.

An abutment may be located inside the piston channel. The abutment may be formed by a surface connecting the first piston channel section and the second piston channel section. The abutment may be due to the difference of the first diameter and the second diameter of the piston channel. The abutment may be the valve seat of the first check valve.

The piston may be biased in a first axial direction by the elastic element. The piston may be biased in the direction of the outlet channel, or the piston may be biased in the direction of the inlet channel. The direction of the magnetic forces on the piston has to be adapted accordingly.

In an example. The elastic element may be located in the piston chamber. Hence, a first end of the elastic element may abut against the first face or the second face, respectively. An opposite second end of the elastic element may abut against a face of a paramagnetic armature or the opposite end of the piston chamber, respectively. The inlet channel or the outlet channel, respectively, may hence extend through the armature. If the coil is powered, the corresponding magnetic field hence causes the piston to move towards the armature or the opposite end of the piston chamber, respectively. By the movement the elastic element is compressed. If the magnetic for is switched of the elastic element pushed the piston back into its initial position. The elastic element may be a spring.

It might be worth noting that the at least a portion of the armature is preferably located in the volume being enclosed by the winding form and that the elastic element preferably pushes at least a portion of the piston out of the volume being enclosed by the winding.

In the above example, it was assumed that the elastic element is compressed by the piston if the coil is powered. Alternatively, the elastic element may be located at the opposite side of the piston and be stretched by the piston, if the coil is powered. In this case the attachment of the elastic element must be adapted accordingly to be able to pull the piston back into its initial position if the coil is not powered.

The piston pump may have an armature. The armature may have a cylindrical peripheral surface. The armature is preferably fixed relative the coil and/or the winding support, i.e., the armature is not displaceable relative to the coil and/or the winding support. For example, the armature may be attached to the winding form, preferably directly. The armature may as well (in addition or alternatively) be fixed to a housing. The armature is preferably a part of the housing. The armature may be coaxially arranged to the longitudinal axis. The armature may have a first face and a second face. The first face and the second face may be connected by a peripheral surface. The first face and the second face are preferably connected by an armature channel. The armature channel may have an armature channel inlet in the first face and an armature channel outlet in the second face. The armature channel may be a part of or even be the inlet or the outlet channel.

The second face of the armature may face the first face of the piston. The armature channel may have a channel wall. The channel wall may limit the channel in the radial direction. The armature may include magnetic material for example a paramagnetic material. In a preferred example, the armature may be made of the magnetic material. The armature channel may have a first armature channel section with a first diameter and a second armature channel section with a second diameter. The first diameter may be smaller than the second diameter. The armature's peripheral surface may be cylindrical. An abutment may be located inside the armature channel. The abutment may be formed by a surface connecting the first armature channel section and the second armature channel section. The abutment may be due to the difference of the first diameter and the second diameter of the armature channel.

The elastic element may abut against said abutment inside the armature channel. The elastic element may be located in the piston chamber and between the piston and the armature. The armature may at least be partially surrounded by a housing. The elastic element be located in between of the piston and the armature and is hence compressed if the piston is moved towards the armature due to the magnetic field generated by the coil.

The first check valve may be arranged in the piston channel. As known in the art, arranged can be understood that the first check valve may be located and/or held inside and/or integrated in the piston channel. All that is required is that the check valve is configured to restrict the flow direction of a fluid flow through piston channel towards the outlet channel, i.e., the check valve is configured to allow a flow towards the outlet channel.

Preferably, the at least one check valve comprises a first check valve insert. The first check valve insert may be located in the piston channel, preferably in the optional second piston channel section. The first check valve insert may engage in at least one radially extending recess of the piston channel. Thereby the first check valve insert is axially secured in the piston channel.

The first check valve insert may comprise a first valve body and a first valve body support. A stem with a stem axis may be attached to the first valve body and the stem may be movably supported by the first valve body support, allowing a translation of the stem parallel to the stem axis. As apparent the first valve body support may be attached to the to the piston channel wall, e.g., as explained above.

Preferably, the first valve body comprises at least two (first) attachment legs. A first section of each first attachment leg may extend essentially radially outwards. Essentially radially means radially within an error margin of ±30°. A second section of the first attachment legs may be attached to the first section and may extends essentially parallel to the longitudinal axis (again with an error margin of ±30°). A third section of the first attachment legs is preferably attached to the second section and extends at least essentially in the radial direction (i.e., within an error margin of ±30°). This provides for an axially stable first valve body support that however is radially elastic to thereby simplify insertion of the valve insert into the piston channel.

As apparent, at least the free end of the third section may preferably engage into the at least one radial recess of the piston channel and thereby hold the first check valve insert in place.

In a preferred example the first check valve insert is preloaded by an elastic member against a valve seat. The valve seat can be provided for example by the surface connecting the first piston channel section and the second piston channel section. The elastic member may be a spring. In an embodiment, the elastic member may be a conical spring.

As may already be apparent, it is preferred if the piston channel wall has at least one radially extending recess, e.g., one or more grooves, e.g., one or more annular grooves.

Preferably, a guide body extends from the first attachment legs towards the attachment leg facing side of the first valve body. For example, at least a portion of the stem facing surface of the guide body may be or provide a part of a linear bearing surface movably supporting the stem. These measures reduces a fluid flow induced wobbling of the first valve body. The elastic member may surround the guide body. The elastic member may abut against the guide body.

For example, the first valve body may be movable between an extended position, in which the first valve body closes the valve seat and a retracted position, wherein in the retracted position a gap is provided between the valve seat and the first valve body.

In a particularly preferred example, a protrusion of the stem and/or the first valve body abut an axially facing surface of the guide body in the retracted position. This enables to clearly define the retracted position of the valve stem and further reduced and wobbling of flatter of the first valve body.

A protective tube may be detachably attached to the winding support. For example, at least a portion of the winding support (and hence the coil on the winding support) may be enclosed by the protective tube. Such tubes can be manufactured much simpler as the prior art pump housings.

Preferably, the piston pump has a first fitting and a second fitting. The each of the fittings may be connected to the inlet channel inlet or the outlet channel outlet. These may even be unitary with the respective channels.

A second check valve may be located and/or integrated into at least one of the two fittings. The second check valve may have a second check valve insert. The description of the first check valve insert may be read on the second check valve insert as well, only the denominator first has to be replaced where appropriate. The first and/or second fitting may like the piston channel have at least one radial recess into which the third sections of the second attachment legs may engage.

The valve body may have a first face and a second face. The first face and the second face may be circular. The first face may have a smaller diameter than the second face. The valve body may have an annular groove supporting a gasket. The gasket may be an O-Ring. In another embodiment, the gasket may be a flat ring, a Q-Ring, a Z-Ring, a Quadring or an I-Ring. The guide body contributes to avoid valve body flatter.

The first attachment legs may be elastic. The first attachment legs may be deformed when inserted into the piston channel. When the first attachment legs are in the right position, when they are aligned with the at least one radial recess or the one or more grooves of the piston channel, the first attachment legs may try to return to their initial position and may latch into at least one radial recess or the one or more grooves. The number of recesses may correspond to the number of first attachment legs. In a closed position of the check valve the fluid flow from the inlet channel to the outlet channel and/or the inlet opening and the outlet opening of the piston may be disabled. In the closed position of the check valve may block the channel of the piston. In a closed position of the check valve, the valve body may abut against the abutment in the piston channel and block the piston channel and thereby the communication of the inlet channel and the outlet channel and/or the piston channel inlet and the piston channel outlet and blocking the fluid flow. The abutment in the piston channel may be the valve seat of the first check valve, i.e., the first valve seat. The gasket may help to provide a fluid tight seal. In an open position of the first check valve, the first valve body may move in axial direction away from the abutment of the piston channel, i.e., the first valve seat. In the open position, a restoring force may be stored in the elastic member. In the open position, the check valve may unblock the channel and allow a fluid flow from the inlet channel to the outlet channel and/or the piston channel inlet and the piston channel outlet.

Since the first check valve insert may not be fixed to the piston, but may be engaged, e.g., latched, to the inside of the piston channel, the check valve insert can easily be replaced while maintaining a stable connection to the piston while the pump is running. Furthermore, these check valves have a low resistance and allow a large flow rate with small external dimensions. This may increase the efficiency of the pump. This means that the pump can also be used for highly viscous media such as gear- or lubricating oils.

The coil may have at least one winding, wherein the at least one winding may be arranged in a winding support. The coil may have 1 -5, 5- 10, 10 - 15, 15 - 20 or 20 - *N* windings, wherein *N* can be any natural number under. There is no real upper limit of N, but in case one in required for legal grounds, it may be assumed that *N* ≤100000. The coil may be a solenoid. The winding support may include a non-magnetic material. The winding support is preferably made of non-magnetic material. The coil may be connected to a controller by an electrical connection. The optional controller may be configured control operation of the piston pump.

The winding support may be made of a synthetic material, such as plastic. The winding support may be made of a non-magnetic material. The winding support may be attached to a protective tube. The protective tube may surround the winding support in the radial direction. The protective tube may be detachably attached to the winding support. The winding support may be inserted into the protective tube. The protective tube may be made from endless drawn plastic tubes. The endless drawn plastic tubes may be cut and adapted to the length of the coil.

Hence, the protective tube does not have to be welded to the winding support or has to be casted to the winding support or together with the winding support. Furthermore, the protective tube can be adapted according to the intended use. The detachable connection of the winding support and the protective cube makes the elements and the pump cheaper and makes it easier to replace single elements of the pump.

The winding support and/or the protective tube may be surrounded by the housing. The winding support may abut against the peripheral surface of the piston and/or the peripheral surface of the armature. The piston may be located at least partially in the winding support.

The distance between the second piston face and the winding support in axial direction may be > 0mm. Preferably, in a relaxed position of the elastic element, i.e., the initial position of the piston, the axial distance between the second armature and the piston may be equal or smaller than the axial distance between the second piston face (i.e., the piston face that faces away from the armature) and the winding support. In other words, in a preferred example, the piston may extend axially over the winding support and/or the optional cage, at least by the axial distance between the armature and the piston, if the piston is in its initial position.

A current may be applied to the coil. The current may actuate the coil and may generate an electromagnetic field. The piston may be excited by the coil. The piston may be axially displaced against the force exerted by the elastic element. The piston may be axially displaced at the frequency of an alternating current (e.g., a sinusoidal alternating current) or a pulsating direct current. When the piston is exited and is axially displaced against the force exerted by the elastic element, the volume in the piston chamber may be reduced. Subsequently the first check valve may be opened, and the fluid may flow through the piston. In a pause between the electrical pulses the force retained by the elastic element may push the piston toward the outlet opening of the piston pump. The increase of pressure may close the first check valve. Since the magnetic field strength decreases with the square of the distance, a high efficiency may be achieved by limiting the piston chamber directly by the winding support and/or if the winding support abuts against the peripheral surface of the piston. Furthermore, the diameter of the piston determines the maximum pressure and the flow rate, for a given oscillation frequency. Therefore, it is advantageous if the piston is in direct contact with the winding support and the peripheral surface of the piston abuts against the inner surface of the winding support. Furthermore, the size of the winding support and/or the coil may be reduced while the diameter of the piston stays the same. Hence, less material is used and the production costs are decreased. The inner surface of the winding support and/or the peripheral surface of the piston may be lined with a friction reducing material (for example PTFE and/or a self-lubricating plastic). The outer surface if the winding support may be lined with a paper and/or another sheet.

If a sinusoidal alternating current is provided, a pulsating direct current can be generated by using a diode that blocks every second half-wave.

In particular, in the case of pumping highly viscous liquids such as lubricating oils, the high viscosity of the medium can greatly slow down the piston movement, so that only a few piston strokes per time unit are recommended (e.g., in the case of media with a viscosity > 4,5 cst (4,5 mm²/s), only piston strokes with a frequency < 20 Hz may be advisable).

In case of a sinusoidal alternating current, the pulse may be started with a voltage peak that is higher than the nominal voltage (e.g., > 10% higher than the nominal voltage). Another aspect of the invention is a method for operating a piston pump comprising a magnetic piston being movably supported inside a coil. For the example the piston pump may be any piston pump as explained herein.

The method may comprise providing a pulsating current to the coil. The phase length of the pulsating current may be separated into two portions, a first portion and a second portion. During a first portion, the voltage applied to the coil is initially increased to generate a magnetic field dimensioned to move the piston from its initial position towards an armature and thereby loading an elastic element and optionally to maintain the piston in this second end position. During the second portion of the phase length, the current flowing through the coil due to the voltage applied is lower than required to maintain the piston in contact with the armature, i.e. the (optional) elastic element moves the piston back into its initial position. In the prior art, two different voltage signals have been used: A square wave voltage signal or alternatively a sinusoidal halfwave as can be obtain by 'filtering' the second half wave of an alternating voltage by a simple diode.

Different from the prior art, it is preferred, if the voltage being applied to the coil is initially raised to a first value. In this context, initially means in the first third, first fourth and/or first fifth of the first portion of the phase length. Subsequently, the voltage is decreased, preferably monotonically, until the end of the first portion. This voltage signal causes the magnetic field to raise quicker than known in the prior art to a second threshold while not exceeding a preset limit.

After the end of the first portion, the voltage applied is preferably inverted. This causes the magnetic field to break down quicker and preferably to be inverted at least for a short duration of e.g., a fourth and/or a fifth of the second portion of the phase length. The inversion of the voltage for a given time causes the magnetic field to be inverted (with a delay) as well and results in an at least partial demagnetization of the armature and/or the piston, thereby increasing the resulting acceleration of the piston towards its initial position.

Even with media with a very high kinematic viscosity, relatively large flow rates of the pump can be achieved this way. Furthermore, since the frequency of the piston stroke may be increased, the pump becomes more efficient, and energy may be saved.

Turning back to the piston pump, a plain bearing sleeve may be located between the winding support and the piston and/or extend in the axial direction of the second face of the piston. The plain bearing sleeve may include or consist of a non-magnetic material. The plain bearing sleeve may be made of a synthetic material, such as plastic. The plain bearing sleeve may abut against the peripheral surface of the piston and the inner surface of the winding support. In an example, the plain bearing sleeve does not cover the entirety of the peripheral surface of the piston in the axial direction. The plain bearing sleeve may have a first opening and a second opening. The plain bearing sleeve may have a sleeve channel. The plain bearing sleeve channel may be coaxially arranged to the longitudinal axis. The plain bearing sleeve provides a linear bearing of the piston and is thus a bushing. The term plain bearing sleeve has been used only to distinguish the plain bearing sleeve from the bushing already mentioned above.

The plain bearing sleeve has the advantage that the piston does not wear of the winding support.

The piston pump may have a first fitting and or a second fitting. The first fitting may be a suction fitting and the second fitting may be a pressure fitting. The first fitting may have an inlet opening and an outlet opening. The second fitting may have an inlet opening and an outlet opening. The first fitting and the second fitting may each have a channel. The first fitting channel may connect the inlet opening and the outlet opening of the first fitting. The first fitting may be coaxially arranged to the longitudinal axis. The second fitting channel may connect the inlet opening and the outlet opening of the second fitting. The second fitting may be coaxially arranged to the longitudinal axis. The inlet opening of the first fitting may be the inlet opening of the piston pump, the outlet opening of the second fitting may be the outlet opening of the piston pump. The first fitting may be connected to the armature. The first fitting may be connected to the armature by a detachable connection or a fixed connection. The first fitting may be connected to the armature a screw fitting. The first fitting may abut against the housing. A sealing may be located between the first fitting and the housing.

The second fitting may abut against the housing. A sealing, such as an O-ring may be located between the second fitting and the housing. The second fitting may be attached to the housing by a detachable connection or a fixed connection. The second fitting may be attached to the housing by a fixing means, such as a screw or a bolt. The second fitting may have a channel with a channel wall. The channel of the second fitting may have a first channel section with a first diameter and a second channel section with a second diameter. The first diameter may be smaller than the second diameter.

A damping washer may be located between the piston and the sleeve or the second fitting. The damping washer may be made of an elastomer. The damping washer may have a damping washer channel. The damping washer may be coaxially arranged to the longitudinal axis. The damping washer may damp the impact of the piston and protect the sleeve or the second fitting against wear.

The second check valve insert may be arranged in the second fitting or as well in the first fitting. The second check valve may as well be located in a part of a fluid line being attached to one of the fittings. The piston pump may operate as well without the second check valve if a reflow of the fluid is already prevented by other means of the hydraulic system to be driven by the piston pump.

In a preferred example, the second check valve insert may be designed according to the first check valve insert. The second check valve insert may be located in the first channel section of the second fitting.

The channel wall of the second fitting may have at least one radial recess and or one or more grooves. The second check valve insert may engage in the at least one radial recess and or one or more grooves in the same way that the first check valve insert engages in the piston channel. The second check valve may behave in the same way as the first check valve. In a closed position of the second check valve, the plunger may abut against inlet opening of the second fitting. In an open position of the second check valve, the plunger may move in axial direction away from the inlet opening of the second fitting. In the open position, a restoring force may be stored in the elastic member of the second check valve insert. In the open position, the check valve may allow a fluid flow through the second fitting. In the closed position of the second check valve the fluid flow through the second fitting may be disabled.

The piston pump may also include a third check valve. The third check valve may be arranged in the first fitting and/or the armature.

### Description of Drawings

In the following the invention will be described by way of example, without limitation of the general inventive concept, on examples of embodiment with reference to the drawings.
Figure 1 shows a sectional view of a first example of a piston pump.
Figure 2 shows a side view of the first example of a piston pump.
Figure 3 shows a rear view of the first example of a piston pump.
Figure 4 shows a sectional view of a second example of a piston pump.
Figure 5 shows a side view of a valve insert.
Figure 6 shows a perspective view of the valve insert.
Figure 7 shows a rear view of a valve body support.

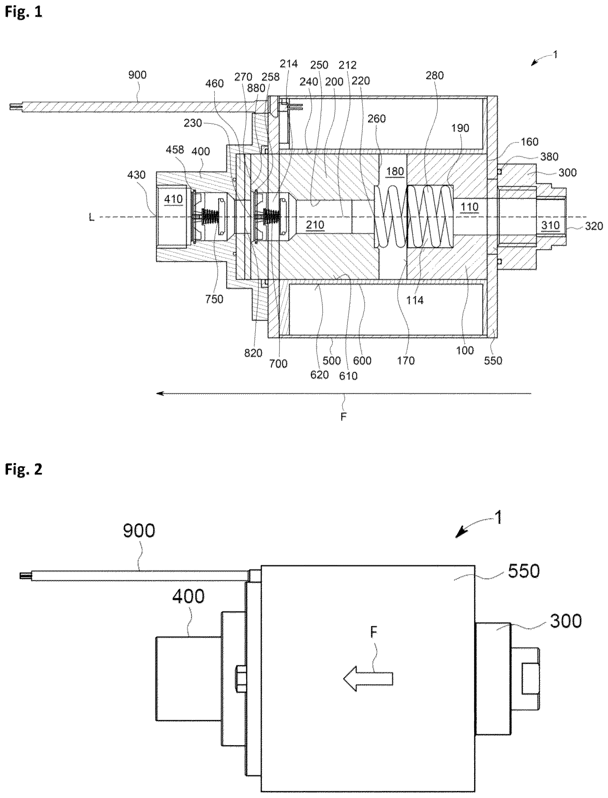

The piston pump 1 in FIGs 1 to 3 has a longitudinal axis L, an inlet opening 320 and an outlet opening 430. The vector F is parallel to the flow direction along the longitudinal axis L and indicates the forward direction and hence points in the forward direction, i.e., from the rear to the front.

The piston pump 1 may comprise a winding support 600. The winding support 600 may comprise or essentially be a sleeve and with a peripheral surface 620 and an inner surface 610. A coil may be wound onto the winding support's 600 peripheral surface 620. The winding support may hence as well be referred to as winding form or coil form or coil body. To declutter the FIG. 1 only the connection lines 900 of the coil are depicted.

As shown, the inner surface 610 of the winding support 600 may delimit a piston chamber 180 radially. In the rearward (axial) direction, the piston chamber 180 may be delimited by end by a front end surface 170 of an armature 100 with an armature channel 110 connecting a first armature face 160 and a second armature face 170. The armature 100 is preferably attached to the inner surface 610 of the winding support 600 and in between of a first fitting 300 with inlet opening 320 and the piston chamber 180. In the forward direction F, the piston chamber may be delimited by a rearward facing surface 460 (rear surface) of the second fitting 400.

The first fitting 300 may comprise a fitting channel 310 that may be considered as at least a first portion of an inlet channel.

A piston 200 may be movably supported by the inner surface 610 of the winding support 600 inside the sleeve section of the winding support 600. The inner surface 610 of the winding support 600 may hence be considered as a plain bearing surface. Similarly the peripheral surface 240 of the piston (piston peripheral surface 240) may be considered as a as a plain bearing surface being coaxially aligned with the inner surface 610.

In between if the second fitting's rear surface 460 and the forward facing surface 270 of the piston 200 (i.e., of the second piston face 270) is an optional damping washer 880 inside the piston chamber 180.

An elastic element 280 may be located inside the piston chamber 180 and may be configured to bias the piston 200 in an axial direction. Like in the presented example, the piston may be preloaded by the elastic element 280 in the forward direction, however it could as well be preloaded in the opposite direction. In the present example, the elastic element 280 is located in between of the rearward facing surface 260 (first surface 260) of the piston 200 and an abutment 190. The abutment 190 may be provided by a recess 114 in the second surface 170 of the armature 100.

The piston may have a piston channel 210 with a first piston channel section 212 and second piston channel section 214. The piston channel 210 connects a piston channel inlet 220 in the first piston face 260 with a piston channel outlet 230 in the second piston face 270.

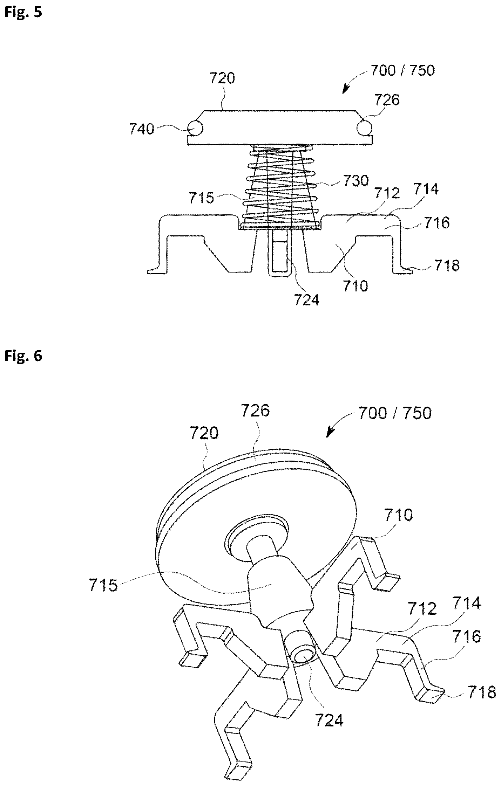

The piston channel 210 is radially delimited by a piston channel wall 250. The diameter of the second piston channel section 214 may be greater than the diameter of the first piston channel section 212. The inner surfaces of the two piston channel sections 212, 214 may be connected by an intermediate surface that may provide an abutment for a first valve body 710 (cf. FIG. 5) and can hence be considered as valve seat.

The second piston channel section houses a first valve insert 700, being depicted in FIGs. 5 and 6 and which will be explained below in more detail. The first valve insert 700 may engages into an annular radial recess 258.

The second fitting 400 may feature a fitting channel that is as well the outlet channel 410 with an outlet opening 430. In the outlet channel 410 may be a (second) valve chamber (considering the second piston channel as a first valve chamber) accommodating a second valve insert 750. The second valve insert is identical to the first check valve insert 700 and engages into a radially extending recess 458 of the outlet channel 410.

To operate the piston valve 100 the coil is connected to a power supply and generates a magnetic field. Due to the magnetic field, the piston moves towards armature 100 and the fluid flows though from through the piston channel towards the rearward face of the second fitting. If the current through the coil is interrupted, the elastic element pushes the piston 100 back in the depicted position and thereby the fluid through the outlet 430.

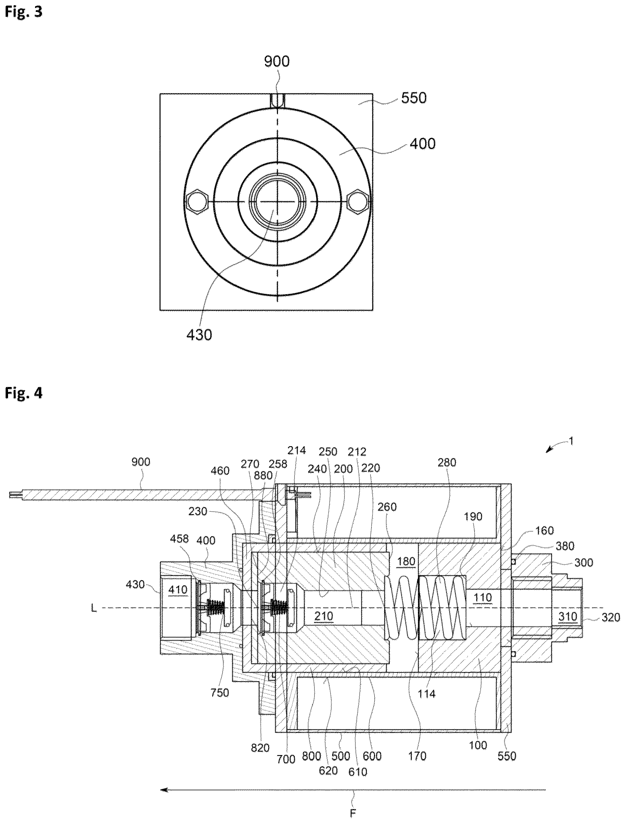

As can be seen in FIG. 2 and 3, the piston pump may have a housing 550 comprising a protective tube 500 (see as well FIG. 1).

The piston pump 100 in FIG. 4 is almost identical to the piston pump as shown in FIG. 1 to FIG. 3 and the description of FIG. 1 to FIG. 3 may be read on FIG 4 as well. The only difference is that the piston pump 100 in FIG. 4 has a plain bearing sleeve 800 located in a forward section the piston chamber 180 and provides a plain bearing surface movably supporting the piston 100 in the piston chamber 180. At this point it is noted that the plain bearing sleeve preferably does not extend through the entire piston chamber 180, i.e., preferably as shown the inner surface 610 of the winding support is in contact with the fluid inside the piston chamber.

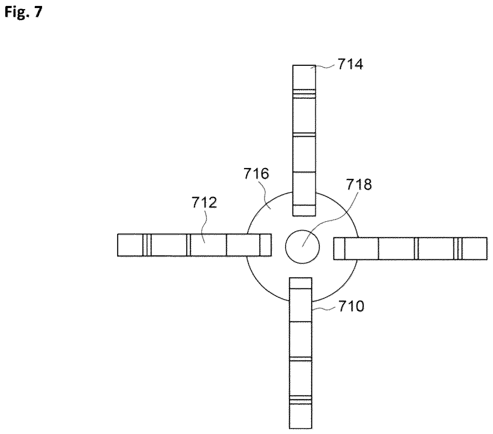

A check valve insert 700/750 like the first check valve insert 700 and/or the second check valve insert 750 preferably comprises a valve body 720 and a stem 724 extending from the front side of the valve body 720 through hole 719 in a valve body support 710 (see FIG. 5 to FIG. 7). The valve body support 710 may have at least two attachment legs 712. In the example, four attachment legs 712 are shown but other numbers can be present as well. Each attachment leg 712 may have three sections 714, 716, 718: A first section 714 may extend radially outwards. A second section 716 may extend from the distal end of the first sections 714 of the attachment legs 712 at least essentially parallel to the axial direction L (cf. FIG. 1 and 4). The third sections 718 of the attachment legs 712 may extend from the end of the second section 716 at least essentially radially outwards and may engage in a radially extending recess like the recess 258, 458 in FIG. 1 or FIG.4

The valve body support 710 may further comprise a guide body that may extend from the attachment legs 712 towards the valve body 720. The guide body 715 may radially support and hence coaxially align an elastic member 730. Further the stem facing surface of the guide body 715 may radially support the stem 724 and if retracted (see FIG. 5) axially support the valve body 720. The guide body 715 thereby contributes to avoid valve body flatter.

The valve body 720, which is sometimes as well referred to as plunger 720 or valve member 720 may have an annular groove 726 supporting a gasket 740. For example, the gasket may be a simple O-ring, but other types of gaskets may as well be used as explained above.

### List of reference numerals

- 1: piston pump
- 100: fixed armature
- 110: armature channel
- 114: recess in armature
- 160: first (rear end) armature face
- 170: second (front end) armature face
- 180: piston chamber
- 190: abutment
- 200: piston
- 210: piston channel
- 212: first piston channel section
- 214: second piston channel section
- 220: piston channel inlet
- 230: piston channel outlet
- 240: piston peripheral surface
- 250: piston channel wall
- 258: groove/grooves/ radially extending recess
- 260: first piston face
- 270: second piston face
- 280: elastic element
- 300: first fitting
- 310: first fitting channel /inlet channel
- 320: inlet opening
- 380: sealing/gasket
- 400: second fitting
- 410: second fitting channel / outlet channel
- 430: outlet opening
- 458: groove/grooves/ radially extending recess
- 460: rear surface of second fitting
- 500: protective tube
- 550: housing
- 600: winding support /coil body
- 610: inner surface
- 620: peripheral surface
- 700: first check valve
- 710: valve body
- 712: attachment legs
- 714: first section of attachment legs
- 715: guide body
- 716: second section of attachment legs
- 718: third section of attachment legs
- 719: through hole
- 720: valve body/ plunger
- 724: stem
- 726: annular groove
- 730: elastic member
- 740: gasket
- 750: second check valve
- 800: sleeve / plain bearing sleeve
- 880: damping washer
- 900: connection lines
- L: longitudinal axis
- F: flow direction

## Claims

1. Piston pump (1) for pumping a fluid comprising:
an inlet channel (310), an outlet channel (410), a piston (200), an armature (100), an elastic element (280), a first check valve (700), a piston chamber (180), a longitudinal axis (L), a winding support (600) and a coil,
wherein:
- the piston (200) is movably supported parallel to the longitudinal axis (L) in a piston chamber (180),
- the piston (200) comprises a first face (260) with a piston channel inlet (220), a second face (270) with a piston channel outlet (230), and a piston channel (210) connecting the piston channel inlet (220) and the piston channel outlet (230),
- the piston (200) is biased in a first axial direction by the elastic element (280),
- the first check valve (700) is arranged in the piston channel (210),
- the coil has at least one winding, wherein the at least one winding is arranged on the winding support (600),
- the inlet channel (310) is configured to communicate with the piston channel inlet (220) and the outlet channel (410) is configured to communicate with piston channel outlet (230),
- a sleeve section of the winding support (600) delimits at least a section of the piston chamber (280) in the radial direction.

2. Piston pump (1) according to claim 1,
**characterized in that**
the winding support (600) provides a linear bearing for the piston (200).

3. Piston (1) pump according to claim 1 or 2,
**characterized in that**
the piston (200) has a peripheral surface (240), wherein the winding support (600) abuts against the peripheral surface (240) of the piston (200).

4. Piston pump (1) according to one of the preceding claims,
**characterized in that**
the piston 200 is at least partially located in a recess of the winding support (600).

5. Piston pump (1) according to one of the preceding claims,
**characterized in that**
the elastic element (280) is located in between of the piston (200) and the armature (100).

6. Piston pump (1) according to one of the preceding claims,
**characterized in that**
the at least one first check valve comprises a first check valve insert (700), wherein the first check valve insert (700) is located in the piston channel (210) and engages in at least one radially extending recess (258) of the piston channel (210).

7. Piston pump (1) according to one of the preceding claims,
**characterized in that**
the first check valve insert (700) comprises a first valve body (720) and a first valve body support (710).

8. Piston pump (1) according to one of the preceding claims,
**characterized in that**:
- a stem (724) with a stem axis is attached to the first valve body (720),
- the stem (724) is movably supported by the first valve body support (710), allowing a translation of the stem parallel to the stem axis,
- the first valve body (720) comprises at least two attachment legs (712), wherein a first section (714) of each attachment leg extends radially outwards withing ±30°, a second section (716) of the attachment legs is attached to the first section (714) and extends parallel to the longitudinal axis with ±30° and a third section (718) of the attachment leg is attached to the second section (716) and extends at in the radial direction within ±30,
- at least the free end of the third section (718) engages into the at least one radial recess (258) of the piston channel (210).

9. Piston pump (1) according to one of the preceding claims,
**characterized in that**
a guide body (716) extends from the attachment legs (712) towards the attachment leg facing side of the first valve body (720).

10. Piston pump (1) according to one of the two preceding claims,
**characterized in that** at least a portion of the stem facing surface of the guide body (716) is a linear bearing surface movably supporting the stem.

11. Piston pump (1) according to one of the preceding claims,
**characterized in that**
the first valve body (720) is movable between an extended position, in which the first valve body (720) closes a valve seat in a retracted position, wherein in the retracted position a gap is provide between the first valve seat and the first valve body (720).

12. Piston pump (1) according to the preceding claim,
**characterized in that**
a protrusion of the stem (724) and/or the first valve body (720) abut an axially facing surface of the guide body in the retracted position.

13. Piston pump (1) according to claim one of the preceding claims,
**characterized in that**
the winding support (600) is detachably attached to a protective tube (500).

14. Piston pump (1) according to one of the preceding claims,
**characterized in that**
the piston pump (1) has a first fitting (300) and a second fitting (400).

15. Piston pump (1) according to the preceding claim,
**characterized in that**
the at least one second check valve (750) is located in the second fitting (400) and/or the first fitting (300).
